# EUROPEAN PATENT APPLICATION

(11) **EP 4 513 926 A1**
(43) Date of publication of application: **26.02.2025**
(21) Application number: 23193289.8
(22) Date of filing: 24.08.2023
(51) Int. Cl.: H04W 12/06, H04W 12/72

(54) **SYSTEMS AND METHODS FOR END USER AUTHENTICATION**

(30) Priority: 21.08.2023 US 202318452636
(71) Applicant: Infobip Ltd., London EC4V 6BW (GB)
(72) Inventor: MILOTIC, Damir, Zagreb (HR); GARIBOVIC, Zlatan, Zagreb (HR); NEJASMIC, Zeljko, Zagreb (HR); BAN, Hrvoje, Zagreb (HR)
(74) Representative: Tomkins & Co

(57) **Abstract**

Systems and methods for authenticating a user. A method of authenticating a user includes receiving a first Mobile Station Integrated Services Digital Network (MSISDN) number registered with a subscriber device, receiving a second MSISDN number from a web server responsive to a request to connect with the web server, wherein the request to connect is triggered by the subscriber device, and causing the subscriber device to be redirected to the authentication module in response to the request to connect. The method further includes determining whether the first MSISDN number matches the second MSISDN number, and providing an authentication indicator responsive to the determination of whether the first MSISDN number matches the second MSISDN number.

## Description

### TECHNICAL FIELD

Various embodiments of the present disclosure relate to authenticating subscribers for access to digital services on a core network, and, more specifically, to authenticating Mobile Station Integrated Services Digital Network (MSISDN) numbers associated with subscribers on a mobile network operator (MNO) network.

### BACKGROUND

Two-factor authentication (2FA) is a security mechanism that requires users to provide two forms of authentication in order to access an account or perform a transaction. End users are often authenticated using 2FA, which includes sending a one-time password (OTP) to the user's device that has been previously linked to the user's account. The user is not able to access the account without entering the OTP. Authentication via OTPs rely on the correct input of a received time-sensitive password (e.g., a code). If the user enters the OTP incorrectly, the OTP is delayed or lost in transit, or if the user cannot access the OTP in time, the user may not be able to authenticate and access their account. Additionally, requiring users to input a second authentication factor, such as an OTP, may be inconvenient and add friction to the login process. This may inadvertently lead to users avoiding the 2FA process or choosing weak passwords to simplify the process, leading to weaker, instead of stronger, security. Further, OTPs may be vulnerable to phishing attacks, and attackers may fraudulently cause users to disclose their OTP (e.g., using a fake login page, over a phone call or message, etc.).

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, methods and systems are disclosed for authenticating a user.

In some aspects, the techniques described herein relate to a method for authenticating a user, the method including: receiving, by an authentication module associated with a mobile network operator (MNO) core network, a first Mobile Station Integrated Services Digital Network (MSISDN) number registered with a subscriber device; receiving, by the authentication module, a second MSISDN number from a web server responsive to a request to connect with the web server, wherein the request to connect is triggered by the subscriber device; causing, by the authentication module, the subscriber device to be redirected to the authentication module in response to the request to connect; determining, by the authentication module and responsive to the causing the subscriber device to be redirected, whether the first MSISDN number matches the second MSISDN number; and providing, by the authentication module, an authentication indicator responsive to the determination of whether the first MSISDN number matches the second MSISDN number.

The receiving, by the authentication module, the second MSISDN number from a web server may comprise receiving the second MSISDN number via a cloud communication platform. The cloud communication platform and the web server may be external to the MNO core network.

In some aspects, the techniques described herein relate to a method for authenticating a user, the method including: receiving, by an authentication module associated with a mobile network operator (MNO) core network, a first Mobile Station Integrated Services Digital Network (MSISDN) number registered with a subscriber device; receiving, by a cloud communication platform and from a web server, a second MSISDN number responsive to a request to connect with the web server, wherein the request to connect is triggered by the subscriber device; causing, by the cloud communication platform, the subscriber device to be redirected to the authentication module in response to the request to connect; determining, by the cloud communication platform and responsive to the causing the subscriber device to be redirected, whether the first MSISDN number matches the second MSISDN number; and providing, by the cloud communication platform and to the web server, an authentication indicator responsive to the determination of whether the first MSISDN number matches the second MSISDN number.

The method may further comprise: receiving, by the cloud communication platform and from the web server, a public IP address associated with the request to connect with the web server; and determining, by the cloud communication platform, that the MNO core network is associated with the subscriber device.

The method may further comprise: generating, by the cloud communication platform based on determining that the MNO core network is associated with the subscriber device, a redirect uniform resource locator (URL) to cause the subscriber device to be redirected to the authentication module; and causing the generated redirect URL to be provided to the subscriber device.

In some aspects, the techniques described herein relate to a system, including: a data storage device storing processor-readable instructions; and a processor operatively connected to the data storage device and configured to execute the instructions to perform operations that include: receiving a first Mobile Station Integrated Services Digital Network (MSISDN) number registered with a subscriber device; receiving a second MSISDN number from a web server responsive to a request to connect with the web server, wherein the request to connect is triggered by the subscriber device; causing the subscriber device to be redirected to an authentication module in response to the request to connect; determining, responsive to the causing the subscriber device to be redirected, whether the first MSISDN number matches the second MSISDN number; and providing an authentication indicator responsive to the determination of whether the first MSISDN number matches the second MSISDN number.

Receiving the first MSISDN number registered with the subscriber device may comprise: storing, in a database, the first MSISDN number mapped to a first private IP address associated with the first MSISDN number; responsive to the redirected request, receiving a second private IP address associated with the subscriber device; and receiving the first MSISDN number from the database based on matching the second private IP address associated with the subscriber device with the first private IP address associated with the first MSISDN number.

The processor may be configured to execute the instructions to perform further operations that include: providing the authentication indicator to the web server, wherein the authentication indicator includes a positive authentication indicator that signals the web server to accept the request to connect.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system for using header enrichment (HE) with hypertext transfer protocol secure (HTTPS) traffic, according to one or more embodiments.
FIG. 2 is a block diagram depicting a position of fields for HE, according to one or more embodiments.
FIG. 3 is a block diagram depicting a system for authenticating a subscriber device, according to one or more embodiments.
FIG. 4 illustrates a sequence-flow diagram for the system of FIG. 3, according to one or more embodiments.
FIG. 5 illustrates another sequence-flow diagram for the system of FIG. 3, according to one or more embodiments.
FIG. 6 is another block diagram depicting a system for authenticating a subscriber device, according to one or more embodiments.
FIG. 7 illustrates a sequence-flow diagram for the system of FIG. 6, according to one or more embodiments.
FIG. 8 depicts a flowchart for subscriber device authentication, in accordance with the techniques disclosed herein.
FIG. 9 illustrates an example device that may execute techniques presented herein.

### DETAILED DESCRIPTION OF EMBODIMENTS

Multi-factor authentication (MFA) is generally more secure than single-factor authentication since it requires more than a single password or credential to log into a user account and/or to provide access to digital services. As used herein, a digital service may be or may include content, a software, an application, a digital access point, a service, and/or the like. In some cases, MFA may be accomplished using header enrichment (HE), which may include adding additional information or metadata to a packet or message header as it traverses a network. For example, by adding a Mobile Station Integrated Services Digital Network (MSISDN) number associated with an end user to hypertext transfer protocol (HTTP) traffic, the receiving side of such traffic may be able to identify end-users by their MSISDN number. Header enrichment, with regard to HTTP, may include intercepting an HTTP message, adding data to a header and/or footer of a packet of the HTTP message, and transmitting the HTTP packet further down its intended network path including the added data to the header and/or footer. However, there are certain drawbacks to using HE with HTTP. For example, HTTP is vulnerable to eavesdropping and HTTP limits market penetration to mobile applications. HTTP Secure (HTTPS) may include additional security in addition to HTTP since, for example, HTTPS traffic is encrypted. However, HTTPS may not be conducive for HE since modification of traffic along a network path may render the traffic (e.g., an HTTPS message or request) invalid. For example, a recipient of a modified HTTPS message may reject the HTTPS message, based on identifying the modification. A modified HTTPS message based transmission may require a recipient to be aware of (e.g., to expect) the modification and may further require the recipient to store or access the respective modification technique, in order to unroll the modification back to a valid HTTPS message. Furthermore, using HE with HTTPS may be susceptible to man-in-the-middle (e.g., third-party) attacks.

Silent mobile verification (SMV) is a method of verifying a user's identity through their mobile device without requiring the user to directly implement a verification process. Silent mobile verification uses a combination of passive data collection and machine learning algorithms to analyze user behavior patterns and device characteristics to determine whether the user is likely to be authentic or fraudulent. Silent mobile verification may be used by a mobile network operator (MNO) using HTTP-based HE technology. However, as discussed above, HTTP-based HE is vulnerable to eavesdropping and may limit market penetration to mobile applications.

Transport layer security (TLS) is a protocol to provide secure communications over a network. Transport layer security may be used by endpoint devices and applications to authenticate and/or encrypt data securely when transferred over a network. The present disclosure relates to techniques for enrichment of TLS such that HTTPS may be used with automatic MFA. In other words, user access to an account or digital services may be authenticated with MFA without the need for manual input such as by receiving and/or inputting OTPs. Enriching HTTPS instead of HTTP, as disclosed herein, has advantages and benefits over HTTP-based HE techniques since HTTPS is encrypted, preventing or mitigating eavesdropping activity. HTTPS also allows for better integration with secure web sites and applications.

Accordingly, techniques and systems disclosed herein provide security and seamlessness benefits over conventional techniques. Techniques and systems disclosed herein may be used to authenticate user access to an account and/or digital services by verifying a user's MSISDN based on MNO registration and further based on a comparison of the registered MSISDN to an access MSISDN (e.g., a received MSISDN, as used herein) used to access an account or digital service. By comparing a registered MSISDN to the access MSISDN, fraudulent activity such as spoofing MSISDNs, phishing of OTPs, and/or the like are rendered inoperable. Techniques and systems disclosed herein may mitigate or prevent unauthorized access, unauthorized resource sharing, fraudulent activity, and/or the like. Techniques and systems disclosed herein may further provide a stronger automated single factor method (e.g., without user intervention) in comparison to traditional techniques, allowing for a relatively more seamless user experience.

Reference to any particular activity is provided in this disclosure only for convenience and not intended to limit the disclosure. A person of ordinary skill in the art would recognize that the concepts underlying the disclosed devices and methods may be utilized in any suitable activity. The disclosure may be understood with reference to the following description and the appended drawings, wherein like elements are referred to with the same reference numerals.

The terminology used herein may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only, and are not restrictive of the features, as claimed.

In this disclosure, the term "based on" means "based at least in part on." The singular forms "a," "an," and "the" include plural referents unless the context dictates otherwise. The term "exemplary" is used in the sense of "example" rather than "ideal." The terms "comprises," "comprising," "includes," "including," or other variations thereof, are intended to cover a non-exclusive inclusion such that a process, method, or product that comprises a list of elements does not necessarily include only those elements, but may include other elements not expressly listed or inherent to such a process, method, article, or apparatus. The term "or" is used disjunctively, such that "at least one of A or B" includes, (A), (B), (A and A), (A and B), etc. Relative terms, such as, "substantially," "approximately," and "generally," are used to indicate a possible variation of ±10% of a stated or understood value. In this disclosure, the term "higher" refers to more, greater than, or up. In this disclosure, the term "lower" refers to below, less than, or down.

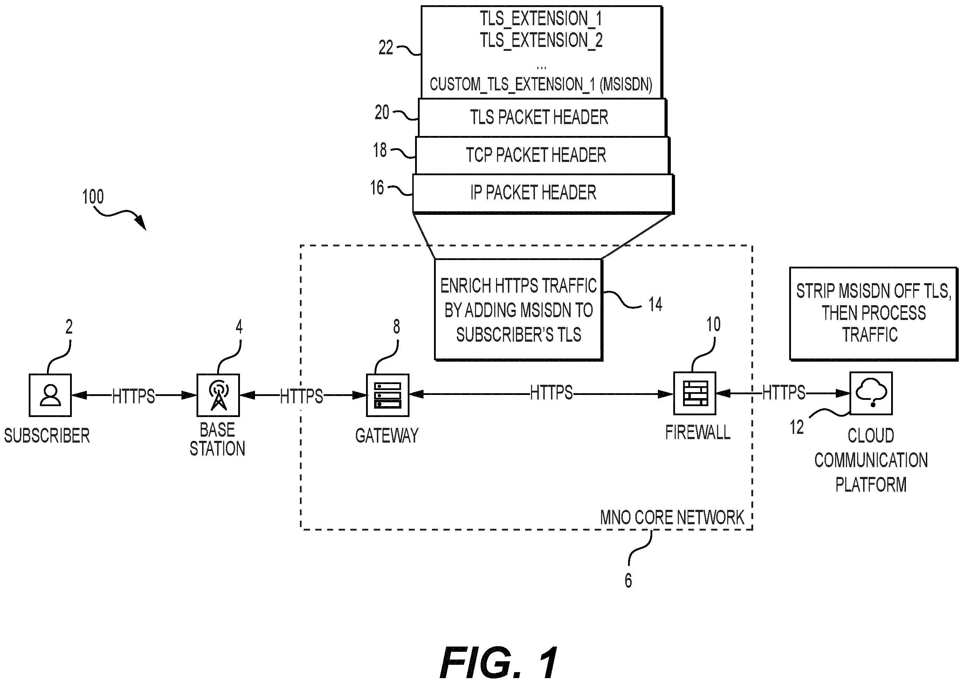

FIG. 1 depicts a system 100 for using HE with HTTPS traffic. System 100 may include system components including subscriber device 2, base station 4, mobile network operator (MNO) core network 6, gateway 8, firewall 10, and cloud communication platform 12. While only one of each of these system components is depicted, two or more of any or each of these system components may be implemented in accordance with the techniques disclosed herein. It will be understood that the techniques disclosed herein may be implemented with all or a subset of the components of the systems (e.g., system 100) disclosed herein.

Subscriber device 2 may be an example of an end user device that is to be authenticated. Subscriber device 2 may be a user device associated with mobile communication services provided by an MNO. Subscriber device 2 may be a mobile device, such as a smartphone, tablet, or other wireless device, to access the mobile network and communicate with other users. Subscriber device 2 may be identified by a unique subscriber identity module (SIM) card, which contains information about the account of a respective subscriber, including the subscriber's phone number, billing information, and/or other subscriber details. An MNO may maintain a database of subscriber information, including billing and usage data, which may be used to manage and/or provision mobile communication services for subscriber device 2. In some embodiments, subscriber device 2 may be required to authenticate its identity before accessing MNO core network 6 and/or enterprise web servers, by using methods including passwords, biometric authentication, MFA, and/or other security mechanisms.

Base station 4 serves as a central point for transmitting and receiving wireless signals to and from mobile devices within its coverage area. Base station 4 may be a standalone device, or it may be integrated into a larger network infrastructure, such as a cellular MNO core network 6. Base station 4 may include a radio transceiver, which allows it to communicate with mobile devices such as subscriber device 2. Base station 4 may communicate with mobile devices using a variety of wireless protocols, including, but not limited to those associated with the Global System for Mobile Communications (GSM), code-division multiple access (CDMA), long-term evolution (LTE), the Third Generation Partnership Project (3GPP), the third generation of wireless mobile telecommunications technology (3G), the fourth generation of broadband cellular network technology (4G), and the fifth-generation technology standard for broadband cellular networks (5G), among others. Base station 4 may be connected to a network infrastructure which provides routing and switching services for the MNO core network 6.

MNO core network 6 may provide a wide range of voice and data services to subscribers. MNO core network 6 may include one or more network elements such as gateway 8 and firewall 10, among other elements that are not shown in FIG. 1.

Gateway 8 may be an example of a gateway general packet radio service (GPRS) support node (GGSN), a packet data network gateway (PGW), or a user plane function (UPF). Gateway 8 may serve as an interface between MNO core network 6 and external data networks, such as the internet or corporate networks. Gateway 8 may be responsible for routing data packets between mobile devices and external networks and performing tasks such as packet filtering and quality of service (QoS) management. In some instances, gateway 8 may be connected to MNO core network 6 as shown in FIG. 1. Alternatively, or in addition, gateway 8 may be integrated in an access network.

As shown at 14 in FIG. 1, HTTPS traffic may be enriched by adding an MSISDN number to a packet exchanged during a TLS handshake. In a typical network communication scenario, data is transmitted in the form of internet protocol (IP) packets over the Internet. IP packets contain a header 16 that provides information about the source and destination of the packet, as well as other details such as the packet length and protocol used.

Transmission Control Protocol (TCP) is a commonly used transport layer protocol that operates above the IP layer and provides reliable, ordered, and error-checked delivery of data between applications running on hosts. Transmission Control Protocol uses its own header 18 that is added to IP packet header 16. The TCP header 18 contains information about the source and destination ports, sequence numbers, and other details for reliable data transmission.

Transport Layer Security (TLS) is a protocol that operates above the TCP layer and provides encryption and authentication of data in transit. When a TLS connection is established between two hosts, the TLS protocol adds its own header 20 on top of TCP header 18. TLS header 20 contains information such as the TLS version, the type of message being sent (e.g., handshake, application data), and other details for secure communication. TLS header 20 may include one or more extensions 22 adding functionality and flexibility to the TLS protocol. In some instances, custom TLS extensions may be added to TLS extensions 22. For example, an MSISDN number associated with subscriber device 2 may be included in a custom TLS handshake message header extension 22.

Firewall 10 may be a security device designed to protect MNO core network 6 from unauthorized access and malicious traffic. Firewall 10 may include one or more hardware or software components that implement a set of security policies to control the flow of traffic between different parts of MNO core network 6. Firewall 10 may monitor incoming and outgoing network traffic and apply a set of predefined rules to determine whether to block each packet. The predefined rules may be based on a variety of criteria, such as source and destination IP addresses, port numbers, and application protocols. Firewall 10 may also be configured to perform packet inspection and filtering. Firewall 10 may be configured to ignore specific changes in TLS packet header extensions 22 and allow packets that have been manipulated in a specific predetermined manner. Alternatively, firewall 10 may prevent an HTTPS communication that has been manipulated from leaving MNO core network 6.

Cloud communication platform 12 is a system that may provide a variety of services including cybersecurity, real-time messaging, voice, and video communication services to users, businesses, enterprises, and developers over the internet. Cloud communication platform 12 may be implemented as a set of software components running on a cloud-based infrastructure, which may include servers, storage devices, and other network resources.

Cloud communication platform 12 may receive an HTTPS communication including one or more custom TLS packet header extensions 22, which may include an MSISDN number associated with subscriber device 2. Cloud communication platform 12 may strip the MSISDN number from the custom TLS packet header extension 22 to determine whether the MSISDN number matches an MSISDN number included in the IP packet header 16 and/or TCP packet header18. If the received MSISDN number matches the included MSISDN number, cloud communication platform 12 may assume that subscriber device 2 is authenticated, and the HTTPS communication is processed as usual.

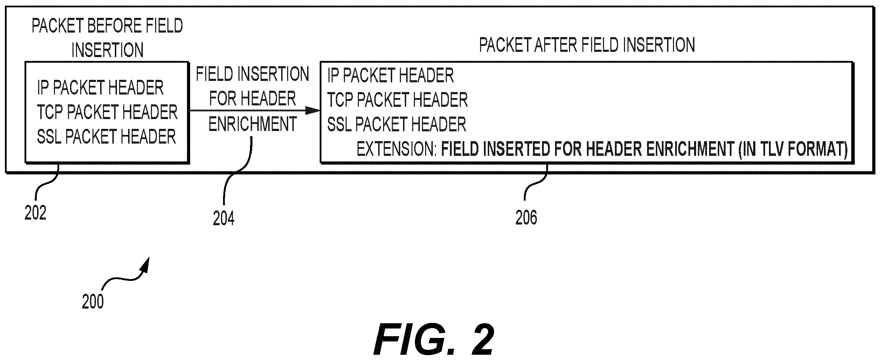

FIG. 2 is a block diagram 200 depicting a position of a field to be inserted for header enrichment. The TLS protocol specifies that headers in an HTTPS packet may be flexibly extended. The HTTPS HE feature enables a cloud user gateway (CloudUGW) to add carrier-defined fields to headers of HTTPS request packets. As shown in FIG. 2, fields for HE are inserted into an "extension" field of a secure sockets layer (SSL) packet header in the type-length-value (TLV) format of the TLS protocol. For example, packet 202 may represent an HTTPS packet before field insertion. In this case, packet 202 includes an IP packet header, a TCP packet header, and an SSL packet header. At operation 204, an extension field is inserted for HE. Packet 206 represents an HTTPS packet after an extension field is inserted at operation 204. Similar to packet 202, packet 206 may also include an IP packet header, a TCP packet header, and an SSL packet header, and also includes an extension field inserted for HE in TLV format in the SSL packet header.

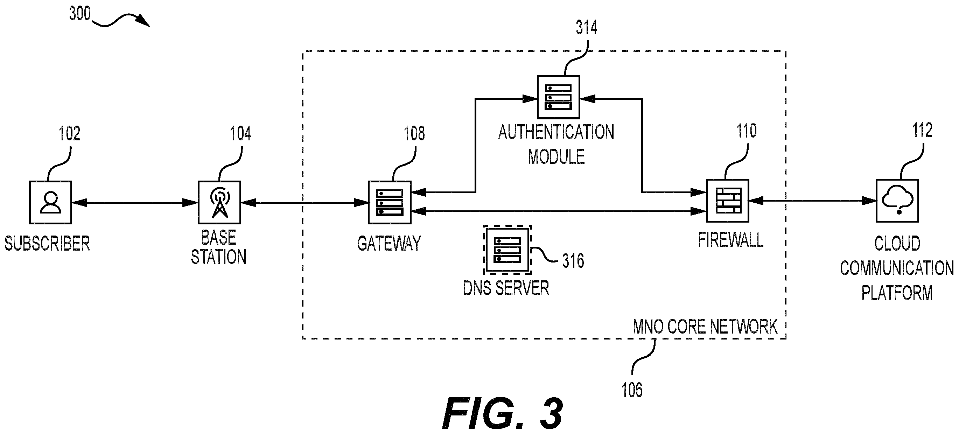

FIG. 3 is a block diagram depicting system 300 for authenticating subscriber device 102 access (e.g., to an account or digital service), according to one or more embodiments. System 300 may include one or more components including subscriber device 102, base station 104, MNO core network 106, and cloud communication platform 112. MNO core network 106 may be an example embodiment of MNO core network 6 of FIG. 1, and may include additional components such as authentication module 314, domain name service (DNS) server 316, and/or the like. Subscriber device 102, base station 104, gateway 108, and cloud communication platform 112 may be respective example embodiments of subscriber device 2, base station 4, gateway 8, and cloud communication platform 12 described in regard to FIG. 1.

Gateway 108 may be configured to route incoming traffic (e.g., to firewall 110, a component external to MNO core network 106, and/or the like. Additionally, when gateway 108 receives HTTPS/TLS traffic with a given designator (e.g., a specific uniform resource locator (URL)), such traffic may be routed to authentication module 314 for authentication of subscriber device 102. For example, gateway 108 may be implemented using a rule (e.g., a first rule) that a URL containing a particular domain (e.g., "https://<auth_mod.ccp.com") is automatically routed to authentication module 314. As another example, a separate DNS server 316 may resolve a URL as pointing to authentication module 314. Furthermore, gateway 108 may be configured to follow a rule (e.g., a second rule) to route specific traffic (e.g., based on header information, footer information, traffic type, source, etc.) to authentication module 314.

During an attachment process between subscriber device 102 and MNO core network 106, authentication module 314 may be configured to receive proxy (e.g., registration) requests from gateway 108 via remote authentication dial-in user service (RADIUS), Diameter, and/or HTTP(S) protocols. Authentication module 314 may extract or receive a private IP address and an MSISDN number from the proxy requests received from gateway 108 and store them in a database (e.g., a relational database) as associated with each other. The private IP address and MSISDN number may be uniquely associated with subscriber device 102. Responsive to a subsequent HTTPS message from subscriber device 102 routed to authentication module 314 via base station 104, gateway 108, and/or other network components (e.g., transparently to authentication module 314), authentication module 314 may terminate the TLS connection with gateway 108 and establish a new TLS connection to cloud communication platform 112, as further discussed herein. Authentication module 314 may retrieve the stored MSISDN number stored in the database using the private IP address of subscriber device 102 (e.g., as derived from the subsequent HTTPS message from subscriber device 102) and may include the retrieved MSISDN number in a message to cloud communication platform 112 and/or a signal indicating whether or not verification was successful. In some embodiments, cloud communication platform 112 may query authentication module 314 for results of an authentication performed by authentication module 314. The results of an authentication may be, for example, a Boolean value of true or false (e.g., authenticated or not authenticated).

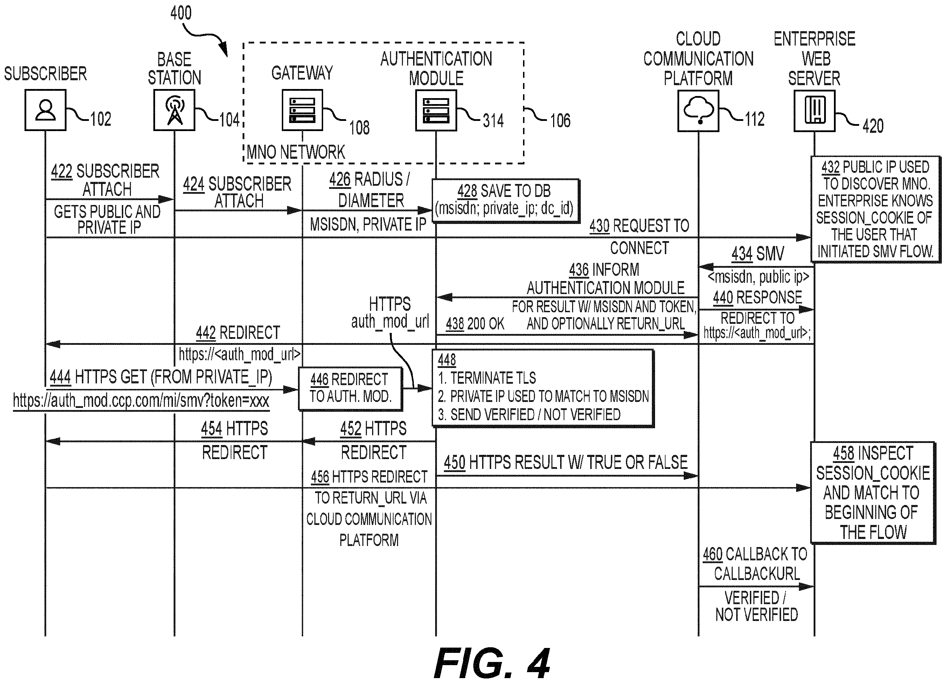

Cloud communication platform 112 may, in some cases, compare a stored MSISDN number from TLS traffic received from authentication module 314 with a received MSISDN number received from an enterprise web server (e.g., enterprise web server 420 of FIG. 4) that is attempting to authenticate subscriber device 102.

FIG. 4 illustrates a sequence-flow diagram 400 showing operation of various components of system 300, according to one or more embodiments. Subscriber device 102, base station 104, gateway 108, authentication module 314, cloud communication platform 112, and MNO core network 106 shown in FIG. 4 correspond to subscriber device 102, base station 104, gateway 108, authentication module 314, and MNO core network 106 described in reference to FIG. 3.

Sequence-flow diagram 400 also includes enterprise web server 420. Enterprise web server 420 may be associated with a digital service and/or account provider and may be a web server, cloud component, or the like that is configured to provide services to users (e.g., via subscriber device 102) including, but not limited to, account management, security, business services, content, software access, application access, access to a digital access point, and/or any other service. Enterprise web server 420 may include software, hardware, memory banks, processors, and any other components that a person having ordinary skill would understand is necessary to perform the functions of a web server, cloud component, and/or the like. Enterprise web server 420 may receive requests from users and may perform various operations related to the requests. Enterprise web server 420 may maintain user accounts, and/or may be implemented using security measures including authentication (e.g., via credentials, usernames, passwords, biometric data, etc.) to ensure privacy and security account and/or digital services. Enterprise web server 420 and cloud communication platform 112 may be external to MNO core network 106 and may communicate with the same via wired or wireless communication (e.g., via a network).

As shown at operation 422 of FIG. 4, in some embodiments, base station 104 may receive a request (e.g., a registration request) from subscriber device 102 to attach to MNO core network 106. The request to attach may include requesting and/or providing a public IP address and/or a private IP address associated with subscriber device 102. The request to attach may be triggered based on an event (e.g., subscriber device 102 entering an area covered by base station 104, a duration of time, an initiation of subscriber device 102, etc.). Accordingly, subscriber device 102 and/or base station 104 may trigger the request to attach on a periodic basis, such that the attachment of subscriber device 102 to MNO core network 106 is updated based on any operational changes (e.g., registration of subscriber device 102 to another base station).

As shown at operation 424, base station 104 may forward the attach request to gateway 108, which is a part of MNO core network 106. Operation 424 may include providing a private IP address, public IP address, and/or MSISDN associated with subscriber device 102, via base station 104.

As shown at operation 426, gateway 108, acting as a proxy, may forward the attach request (e.g., a copy of the attach request, a formatted version of the attach request, etc.) to authentication module 314 (e.g., using a RADIUS, Diameter, and/or HTTP(S) protocol). Authentication module 314 may extract the private IP address and MSISDN number from the received attach request. In one or more embodiments, gateway 108 may send select components of the request to attach, such as a private IP address and MSISDN number associated with subscriber device 102.

At operation 428, authentication module 314 may store the private IP address, MISISDN number, and/or data center identification number associated with subscriber device 102 at a database (e.g., a relational database) associated with and/or accessible via authentication module 314. The private IP address and stored MSISDN number may be associated such that the private IP address is mapped to the stored MSISDN number. Accordingly, as further discussed herein at operation 448, the stored MSISDN number may be retrieved from the database based on a query including the private IP address. Operations 422-428 may be performed periodically to update the database of operation 428 such that the database includes updated MSISDN numbers and/or private IP addresses for subscriber device 102. In some cases, two or more data centers associated with an MNO may include overlapping ranges of private IP addresses for subscriber devices. The data center identification number stored at operation 428 may be used to positively identify each unique subscriber device 102 based on an associated data center, even if multiple subscriber devices share the same private IP address.

As shown at operation 430, in some embodiments, enterprise web server 420 may receive an access request (e.g., a request to connect) from subscriber device 102 (e.g., the access request originator) via a network (e.g., via a network made available via MNO core network 106). Operation 430 may occur independently from one or more of operations 422-428. For example, operation 430 may occur before subscriber device 102 attaches to MNO core network 106, after such attachment, or during attachment. The access request may be a HTTPS request and may include, for example, an attempt from subscriber device 102 to log into an account managed by enterprise web server 420 and/or access digital services provided by enterprise web server 420. In some cases, subscriber device 102 may be previously registered with enterprise web server 420. The registration may include a phone number (e.g., an MSISDN number) associated with subscriber device 102 such that enterprise web server 420 includes or has access to the MSISDN number that is associated with subscriber device 102. Alternatively, or in addition, the access request at operation 430 may include providing an MSISDN associated with subscriber device 102 to enterprise web server 420. Accordingly, operation 430 may result in a received MSISDN being received by and/or being accessible to enterprise web server 420.

The access request at operation 430 may include entering a username and a password into a portal managed by enterprise web server 420. As an example, the access request may be a request to access a user account associated with enterprise web server 420. As another example, the access request may be a request to access a digital service offered and/or facilitated by enterprise web server 420.

As shown at operation 432, a public IP address may be derived by enterprise web server 420 based on the access request of operation 430. The public IP address may be publicly available (e.g., publically visible) and may represent a unique IP address assigned to subscriber device 102. The public IP address may be associated with an MNO and may be used to discover which MNO the subscriber device 102 is subscribed to and/or via which MNO provides subscriber device 102 with access to a data network. An MNO may be identified based on a public IP address by, for example, using geolocation databases used to associate IP addresses with geographic locations, a reverse DNS lookup, border gateway protocol (BGP) routing data, network analysis techniques such as traceroute or pathping, and/or the like. In some cases, enterprise web server 420 may have access to a session cookie of the subscriber device 102 that initiated an SMV flow and may use this information to identify the MNO associated with subscriber device 102. The MNO associated with the access request may be identified by enterprise web server 420 or by cloud communication platform 112.

Accordingly, as a result of operation 432, enterprise web server 420 may have access to a received MSISDN (e.g., as provided by a subscriber via subscriber device 102, as included in the access request of operation 430, as received during a registration or pre-registration with enterprise web server 420, etc.). Additionally, as a result of operation 432, enterprise web server 420 may determine that subscriber device 102 and/or the access request of operation 430 is associated with MNO core network 106.

As shown at operation 434, an SMV message may be received at cloud communication platform 112 from enterprise web server 420. The SMV message may include the received MSISDN number associated with subscriber device 102, as received and/or stored at enterprise web server 420 at operation 432. The SMV message may also include the public IP address associated with subscriber device 102.

As shown at operation 436, authentication module 314 may receive the result of MNO discovery (e.g., identification of the MNO associated with the public IP address associated with the access request of operation 430), the received MSISDN associated with subscriber device 102, and a token. The token may be a globally unique identifier given to each instance of use of a service associated with web server 420. In some cases, the token may be a universally unique identifier (UUID) or globally unique identifier (GUID) and may be used for troubleshooting communication errors. In some embodiments, a return URL may be provided to authentication module 314 at operation 436, the return URL to be used after verification/authentication (e.g., operation 448) to redirect subscriber device 102 back to enterprise web server 420. Authentication module 314 may store the return URL to be used at operation 452. Authentication module 314 may store the received MSISDN number received from cloud communication platform 112 for subsequent comparison with the stored MSISDN stored at a database accessible by authentication module 314, as further discussed herein.

As shown at operation 438, an HTTPS status code indicating a successful request (e.g., a "200 OK" status code) may be received by cloud communication platform 112 from authentication module 314. Cloud communication platform 112 may also receive additional information from authentication module 314 including information used to generate a redirect URL. At this point, in some embodiments, cloud communication platform 112 may generate the redirect URL for subscriber device 102 to be redirected to gateway 108 and/or authentication module 314 for authentication of subscriber device 102.

As shown at operation 440, enterprise web server 420 may receive the redirect URL from cloud communication platform 112 to be sent to subscriber device 102 in response to the access request at operation 430. As shown at operation 442, subscriber device 102 may receive the redirect URL from enterprise web server 420 in response to the access request at operation 430. Subscriber device 102 may receive the redirect URL and may trigger a redirect operation (e.g., automatically in response to receipt of the redirect URL or in response to a user selection or approval of the redirect URL).

As shown at operation 444, in response to triggering the redirect operation, gateway 108 may receive an HTTPS GET request from subscriber device 102 via base station 104. The HTTPS GET request may include or may be associated with a private IP address of subscriber device 102. An example redirect URL may be "https://auth_mod.ccp.com/mi/smv?token=xxx," where "auth_mod" refers to authentication module 314 and "ccp" refers to cloud communication platform 112. If the redirect URL is incorrect (e.g., points to an invalid destination), a fallback connection request may be generated to request a valid redirect URL.

As shown at operation 446, gateway 108 may redirect the HTTPS GET request of operation 444 to authentication module 314, based on the redirect URL contained in the HTTPS GET request. For example, as discussed herein, the HTTPS GET request of operation 444 may meet a rule to forward the HTTPS GET request to authentication module 314.

As shown at operation 448, upon receiving the redirected request of operation 446, authentication module 314 may terminate a prior TLS connection. Authentication module 314 may extract the private IP address associated with subscriber device 102 (e.g., from or based on the HTTPS GET request, as indicated by base station 104, etc.). Authentication module 314 may use the private IP address to look up and retrieve the stored MSISDN number stored in connection with operation 428 and associated with the private IP address received at operation 448. Authentication module 314 may compare the received MSISDN number associated with subscriber device 102 received at operation 436, with the stored MSISDN number stored in the database as mapped to the private IP address at operation 448, as originally stored at operation 428. If the stored MSISDN number retrieved from the database related to operation 428 (e.g., the stored MSISDN number associated with the private IP address of subscriber device 102 stored at operation 428) matches the received MSISDN number received at operation 436 (e.g., the received MSISDN number associated with the user's registration with enterprise web server 420), authentication module 314 may determine that subscriber device 102 which sent the HTTPS GET request at operation 444 is verified (e.g., authenticated).

Failure to verify (e.g., authenticate) subscriber device 102 may occur if the received MSISDN number (e.g., phone number) associated with subscriber device 102 during registration of subscriber device 102 with enterprise web server 420, at operation 430 and/or operation 432, is incorrect (e.g., does not match the stored MSISDN number stored at the database related to operation 428, if there is a typographical error in the phone number entered during registration, etc.). For example, a typographical error may lead to an incorrect MSISDN number stored at enterprise web server 420, in association with subscriber device 102. Additionally, failure to verify or authenticate subscriber device 102 may occur if subscriber device 102 is a malicious entity that obtained access to a user's username and password and attempts to gain access to a user account. Authentication module 314 may determine that the received MSISDN number associated with the user's account with enterprise web server 420 is not the same as the stored MSISDN number associated with subscriber device 102. Upon completion of a verification operation at operation 448 (e.g., resulting in a verification or failure to verify), authentication module 314 may generate a redirect URL to cause subscriber device 102 to be redirected back to enterprise web server 420, as further discussed below in reference to operation 456.

As shown at operation 450, cloud communication platform 112 may receive a verification result (e.g., a HTTPS result) indicating whether subscriber device 102 is verified or not verified. In some cases, the verification result may be a "true" Boolean value indicating that subscriber device 102 is verified, or it may be a "false" Boolean value indicating that subscriber device 102 is not verified. Alternatively, the verification result may be a numerical value, a tier, a bit, and/or the like.

As shown at operation 452, gateway 108 may receive an HTTPS redirect request from authentication module 314. The HTTPS redirect request may be generated by authentication module 314 responsive to completion of operation 448. The HTTPS redirect request may be generated whether operation 448 results in a verification (e.g., a positive result or a match) or whether operation 448 does not result in a verification (e.g., a negative result or a mismatch).

As shown at operation 454, subscriber device 102 may receive the HTTPS redirect request from gateway 108 via base station 104. As shown at operation 456, enterprise web server 420 may receive the redirected HTTPS request from subscriber device 102 indicating that authentication module 314 has completed performance of operation 448. In some embodiments, redirection of HTTPS traffic at operation 456 may be routed through cloud communication platform 112.

As shown at operation 458, enterprise web server 420 may determine whether a session cookie associated with the redirection of HTTPS traffic at operation 456 matches the session cookie of the access request at operation 430. Matching the session cookie may mitigate or prevent cross site request forgery (CSRF), where a malicious entity may fraudulently cause a user to execute a network request for authentication (e.g., operation 444) without the user having requested to connect with web server 420 at operation 434. For example, if a malicious entity initiated an authentication flow with a victim user's MSISDN number (e.g., at operation 434), and caused the user to execute operation 444, authentication module 314 may incorrectly verify (e.g., authenticate) the user. Accordingly, matching a session cookie may cause enterprise web server 420 to confirm that all operations related to the authentication were executed by the same device (e.g., subscriber device 102) and a third party did not maliciously invade the authentication flow.

As shown at operation 460, enterprise web server 420 may receive a result of operation 448 indicating whether subscriber device 102 was verified or not verified (e.g., whether subscriber device 102 was authenticated or not authenticated). Results received at operation 460 may be received using a callback URL, which allows for asynchronous communications between subscriber device 102, authentication module 314, and enterprise web server 420. For example, verification results received at operation 460 may be received before or after redirected request of operation 456 is received by enterprise web server 420. If the redirected request of operation 456 is received before results of verification, enterprise web server 420 waits to grant or deny access to subscriber device 102 until results of authentication are received from authentication module 314 shown at operation 460. However, if positive results of verification of operation 460 are received before the redirected request of operation 456, then enterprise web server 420 may accept the access request of operation 430 and grant access to subscriber device 102 (e.g., immediately) upon receipt of the redirected request of operation 456. If negative verification (e.g., failed verification) of operation 460 is received, the access request of operation 430 may be denied (e.g., rejected or refused), and access may not be granted to subscriber device 102.

Accordingly, the techniques disclosed in relation to sequence-flow diagram 400 allow a subscriber device 102 to be verified based on a stored MSISDN (e.g., during an attachment operation with MNO core network 106 and a received MSISDN received or determined as part of an access request operation. These techniques provide for verification (e.g., authentication) of subscriber device 102 while preventing a stored MSISDN associated with subscriber device 102 during an attachment operation from being transmitted externally from MNO core network 106. Further, these verification techniques may be implemented seamlessly and automatically, without user input or interaction.

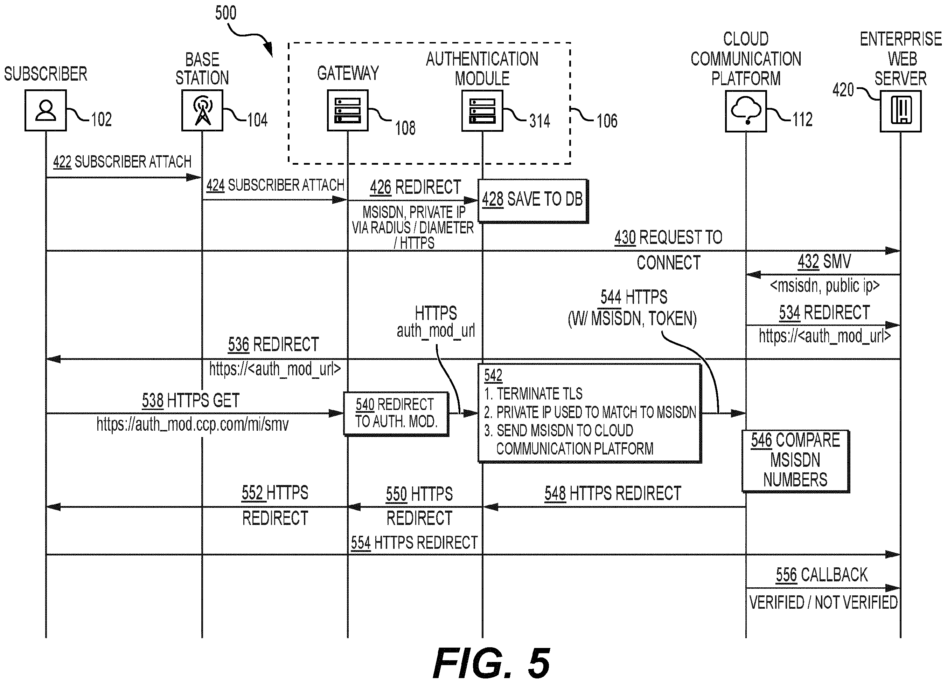

FIG. 5 illustrates a sequence-flow diagram 500 showing various acts of various components of system 300, according to one or more embodiments. Subscriber device 102, base station 104, gateway 108, authentication module 314, cloud communication platform 112, and MNO core network 106 shown in FIG. 5 are described herein in relation to FIG. 3 and FIG. 4. Sequence-flow diagram 500 also includes enterprise web server 420 as discussed in relation to FIG. 4.

Operations 422-432 of FIG. 5 are the same as operations 422-432 of FIG. 4. Accordingly, these operations are not described again herein, for brevity. As shown at operation 534, enterprise web server 420 may receive a redirect URL generated at cloud communication platform 112 to cause subscriber device 102 to be redirected to authentication module 314.

As shown at operation 536, subscriber device 102 may receive the generated redirect URL from enterprise web server 420 in response to the access request of operation 430.

As shown at operation 538, in response to triggering the redirect operation, gateway 108 may receive an HTTPS GET request from subscriber device 102 via base station 104. The HTTPS GET request may include or may be associated with a private IP address of subscriber device 102. An example redirect URL may be "https://auth_mod.ccp.com/mi/smv," where "auth_mod" refers to authentication module 314 and "ccp" refers to cloud communication platform 112. If the redirect URL is incorrect (e.g., points to an invalid destination), a fallback connection request may be generated to request a valid redirect URL.

As shown at operation 540, gateway 108 may redirect the HTTPS GET request of operation 538 to authentication module 314 based on the redirect URL contained in the HTTPS GET request. For example, as discussed herein, the HTTPS GET request of operation 538 may meet a rule to forward the HTTPS GET request to authentication module 314.

As shown at operation 542, upon receiving the redirected request of operation 540, authentication module 314 may terminate a prior TLS connection. Authentication module 314 may extract the private IP address associated with subscriber device 102 (e.g., from or based on the HTTPS GET request, as indicated by base station 104, etc.). Authentication module 314 may use the private IP address to look up and retrieve the stored MSISDN number stored in connection with operation 428. Authentication module 314 may generate an HTTPS message including the MSISDN number retrieved from the database and a token.

As shown at operation 544, an HTTPS message with the stored MSISDN number retrieved from the database may be received by cloud communication platform 112 from authentication module 314. The stored MSISDN number may, for example, be included in the body of the HTTPS message provided to communication platform 112.

As shown at operation 546, cloud communication platform 112 may compare the stored MSISDN number received from authentication module 314 at operation 544 with the received MSISDN number received from enterprise web server 420 at operation 432. If the stored MSISDN number retrieved from authentication module 314 (e.g., the stored MSISDN number associated with the private IP address of subscriber device 102 stored at operation 428) matches the received MSISDN number received from enterprise web server 420 at operation 432 (e.g., the received MSISDN number associated with the user's registration with enterprise web server 420), cloud communication platform 112 may determine that subscriber device 102, which initiated the access request at operation 430 is verified (e.g., authenticated).

As shown at operation 548, authentication module 314 may receive an HTTPS redirect request from cloud communication platform 112. The HTTPS redirect request may be generated by cloud communication platform 112 responsive to completion of operation 546. The HTTPS redirect request may be generated whether operation 546 results in a verification (e.g., a positive result or a match) or whether operation 546 does not result in a verification (e.g., a negative result or a mismatch).

As shown at operation 550, gateway 108 may receive the HTTPS redirect request from authentication module 314. As shown at operation 552, subscriber device 102 may receive the HTTPS redirect request from gateway 108 via base station 104. As shown at operation 554, enterprise web server 420 may receive the redirected HTTPS request from subscriber device 102 indicating that cloud communication platform 112 has completed performance of operation 546. In some embodiments, redirection of HTTPS traffic at operation 554 may be routed through cloud communication platform 112.

As shown at operation 556, enterprise web server 420 may receive a result of operation 546 indicating whether subscriber device 102 was verified or not verified (e.g., whether subscriber device 102 was authenticated or not authenticated) Results received at operation 556 may be received using a callback URL, which allows for asynchronous communications between subscriber device 102, cloud communication platform 112, and enterprise web server 420.

Accordingly, the techniques disclosed in relation to sequence-flow diagram 500 allow a subscriber device 102 to be verified based on a stored MSISDN (e.g., during an attachment operation with MNO core network 106 and a received MSISDN received or determined as part of an access request operation). These techniques provide for verification (e.g., authentication) of subscriber device 102 while preventing a stored MSISDN associated with subscriber device 102 during an attachment operation from being transmitted externally to enterprise web server 420. Further, these verification techniques may be implemented seamlessly and automatically, without user input or interaction.

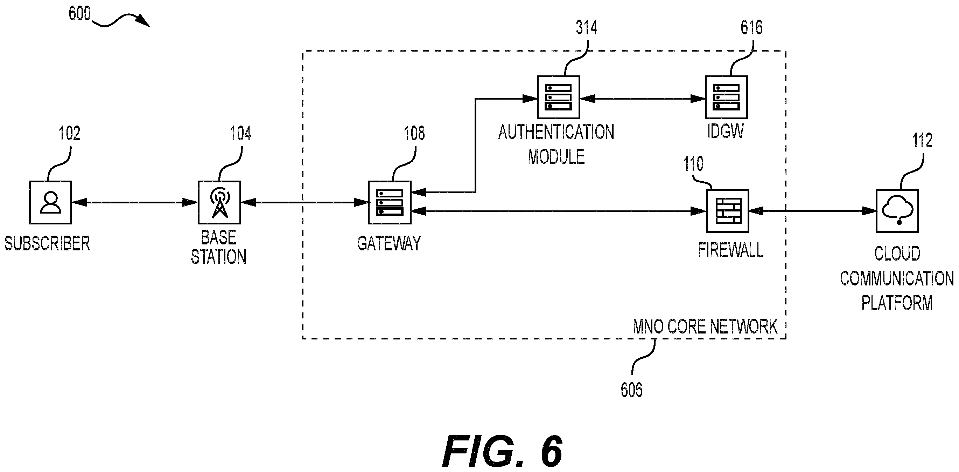

FIG. 6 is a block diagram depicting system 600 for authenticating subscriber device 102 access (e.g., to an account or digital service), according to one or more embodiments. System 600 may include one or more components including subscriber device 102, base station 104, MNO core network 606, and cloud communication platform 112. MNO core network 606 may be an example embodiment of MNO core network 106 of FIG. 1, and may include additional components such as authentication module 314 and identity gateway (IDGW) 616.

During an attachment process between subscriber device 102 and MNO core network 106, authentication module 314 may be configured to receive proxy requests from gateway 108 via RADIUS, Diameter, and/or HTTP(S) protocols. Authentication module 314 may extract a private IP address and an MSISDN number from the proxy requests received from gateway 108 and store them together in a database. The private IP address and MSISDN number may be uniquely associated with subscriber device 102. Responsive to a subsequent HTTPS message routed to authentication module 314, authentication module 314 may terminate the TLS connection with gateway 108 and establish a new TLS connection to IDGW 616. Authentication module 314 may retrieve the stored MSISDN number stored in the database using the private IP address of subscriber device 102 and include the retrieved MSISDN number in an HTTPS message (e.g., in a body/payload of the HTTPS message).

IDGW 616 may be an authentication module that is part of or associated with MNO core network 606 and may provide mobile identity services to MNO core network 606. IDGW 616 may extract the MSISDN number included in the HTTPS message body. IDGW 616 may compare the extracted MSISDN number with a previously received and stored MSISDN number from cloud communication platform 112 that has been verified to be associated with a user of a service associated with cloud communication platform 112.

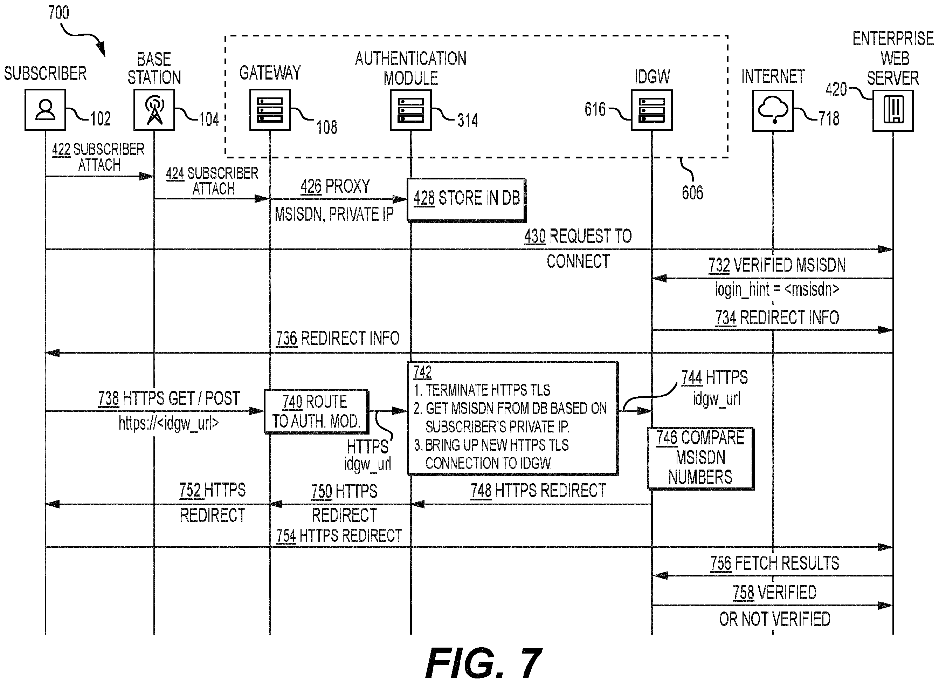

FIG. 7 illustrates a sequence-flow diagram 700 showing various acts of various components of system 600, according to one or more embodiments. Subscriber device 102, base station 104, gateway 108, authentication module 314, and enterprise web server 420 shown in FIG. 7 are described herein in relation to FIG. 3 and FIG. 4. Sequence-flow diagram 700 also includes IDGW 616, as discussed in relation to FIG. 6, and internet 718. Internet 718 may refer to a network for facilitating global information exchange through a distributed network infrastructure.

Operations 422-430 of FIG. 7 are the same as operations 422-430 of FIG. 4. Accordingly, these operations are described again herein, for brevity. As shown at operation 732, an HTTPS message with a verified MSISDN number (e.g., an MSISDN number associated with an account to which request to connect of operation 430 is attempting to access) is received by IDGW 616 from enterprise web server 420 via internet 718. In some embodiments, the MSISDN number may be a login hint that is transmitted to IDGW 616. In some embodiments, a public IP address may be derived by enterprise web server 420 based on the access request of operation 430. The public IP address may be associated with an MNO and may be used to discover which MNO the subscriber device 102 is subscribed to and/or via which MNO provides subscriber device 102 with access to a data network.

As shown at operation 734, enterprise web server 420 may receive, via internet 718, a redirect URL generated at IDGW 616 to cause subscriber device 102 to be redirected to authentication module 314. As shown at operation 736, subscriber device 102 may receive the redirect URL via internet 718 from enterprise web server 420 in response to the access request of operation 430.

As shown at operation 738, in response to triggering the redirect operation, gateway 108 may receive an HTTPS GET/POST request from subscriber device 102 via base station 104. The HTTPS GET/POST request may include or may be associated with a private IP address of subscriber device 102. In some instances, an example redirect URL may be "https:// <idgw_url>." If the redirect URL is incorrect (e.g., points to an invalid destination), a fallback connection request may be generated to request a valid redirect URL.

As shown at operation 740, gateway 108 may redirect the HTTPS GET/POST request of operation 738 to authentication module 314 based on the redirect URL contained in the HTTPS GET/POST request. For example, as discussed herein, the HTTPS GET/POST request of operation 738 may meet a rule to forward the HTTPS GET request to authentication module 314.

As shown at operation 742, upon receiving the redirected request of operation 740, authentication module 314 may terminate a prior HTTPS TLS connection. Authentication module 314 may extract the private IP address associated with subscriber device 102 (e.g., from or based on the HTTPS GET request, as indicated by base station 104, etc.). Authentication module 314 may use the private IP address to look up and retrieve the stored MSISDN number stored at operation 428. Authentication module 314 may generate an HTTPS message including the MSISDN number retrieved from the database in connection with operation 428. A new HTTPS TLS connection may be initiated with IDGW 616.

As shown at operation 744, the HTTPS message with the stored MSISDN number retrieved from the database is received by IDGW 616 from authentication module 314.

As shown at operation 746, IDGW 616 may compare the stored MSISDN number received from authentication module 314 at operation 744 with the received MSISDN number received from enterprise web server 420 at operation 732. If the stored MSISDN number retrieved from authentication module 314 (e.g., the stored MSISDN number associated with the private IP address of subscriber device 102 stored at operation 428) matches the received MSISDN number received from enterprise web server 420 at operation 732 (e.g., the received MSISDN number associated with the user's registration with enterprise web server 420), IDGW 616 may determine that subscriber device 102, which initiated the access request at operation 430 is verified (e.g., authenticated).

Upon completion of verification, whether the verification results are positive or negative, IDGW 616 generates a redirect URL to cause subscriber device 102 to be redirected back to enterprise web server 420.

As shown at operation 748, authentication module 314 may receive an HTTPS redirect request from IDGW 616. The HTTPS redirect request may be generated by cloud communication platform 112 responsive to completion of operation 746. The HTTPS redirect request may be generated whether operation 746 results in a verification (e.g., a positive result or a match) or whether operation 746 does not result in a verification (e.g., a negative result or a mismatch).

As shown at operation 750, gateway 108 may receive the HTTPS redirect request from authentication module 314. As shown at operation 752, subscriber device 102 may receive the HTTPS redirect request from gateway 108 via base station 104. As shown at operation 754, enterprise web server 420 receives the redirected HTTPS request from subscriber device 102 via internet 718 indicating that IDGW 616 has completed performance of operation 746.

As shown at operation 756, IDGW 616 may receive a request from enterprise web server 420 to provide results of verification (e.g., authentication) performed at operation 746. As shown at operation 758, enterprise web server 420 receives a result of operation 746 indicating whether subscriber device 102 was verified or not verified (e.g., whether subscriber device 102 was authenticated or not authenticated). Results received at operation 758 may be received using a callback URL, which allows for asynchronous communications between subscriber device 102, IDGW 616, and enterprise web server 420.

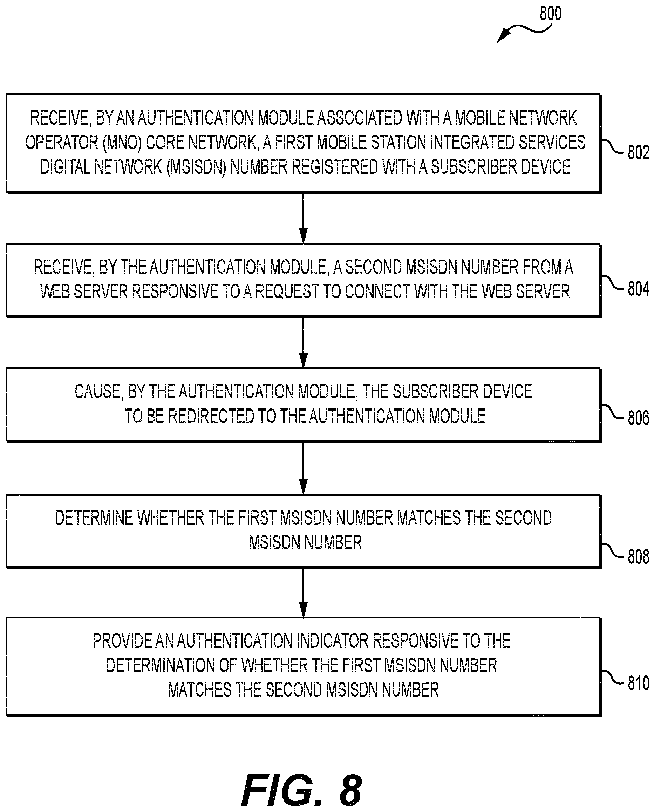

FIG. 8 depicts a flowchart 800 for subscriber authentication, in accordance with the techniques disclosed herein. At step 802, a first MSISDN number associated with a subscriber may be received by an authentication module associated with a MNO core network. For example, the first MSISDN number may be received by authentication module 314 at operation 426 as shown in FIG. 4 and may be stored at operation 428 as associated with a corresponding private IP address.

At step 804, a second MSISDN number may be received by the authentication module from a web server responsive to a request to connect (e.g., an access request) with the web server. For example, the request to connect with the web server may be a request to connect with enterprise web server shown at operation 430 of FIG. 4. The second MSISDN number received by the authentication module 314 at operation 436, as shown in FIG. 4 and may be provided by the enterprise web server in response to the request to connect.

At step 806, the authentication module causes a subscriber device that initiated the request to connect with the web server to be redirected to the authentication module. For example, authentication module 314 may transmit the "200 OK" HTTPS status code to cloud communication platform 112 at operation 438 of FIG. 4. Responsive to the "200 OK" status code, the cloud communication platform 112 may generate a redirect URL that causes subscriber device 102 to be redirected to authentication module, as shown at operations 440-446 in FIG. 4.

At step 808, responsive to the redirected request, the authentication module or cloud communication platform may determine whether the first MSISDN number (e.g., the first MSISDN number received at step 802) matches the second MSISDN number (e.g., the second MSISDN number received at step 804). For example, authentication module 314 may retrieve the stored MSISDN number based on a private IP address associated with the redirect at step 806. Authentication module 314 may compare the retrieved stored MSISDN number, originally received at operation 426, to the received MSISDN number received at operation 436 to determine whether they match, as shown at operation 448 of FIG. 4.

At step 810, the authentication module or cloud communication platform may provide an authentication indicator responsive to the determination of whether the first MSISDN number matches the second MSISDN number. For example, authentication module 314 may send an HTTPS message with a true/false result corresponding to the verification result, as shown at operation 450 (and further at operation 460) of FIG. 4. A positive verification may cause the request to connect, discussed in reference to step 804, to be approved and access corresponding to the request to connect may be granted to the subscriber device. A negative verification may cause the request to connect, discussed in reference to step 804, to be denied and access corresponding to the request to connect may be denied.

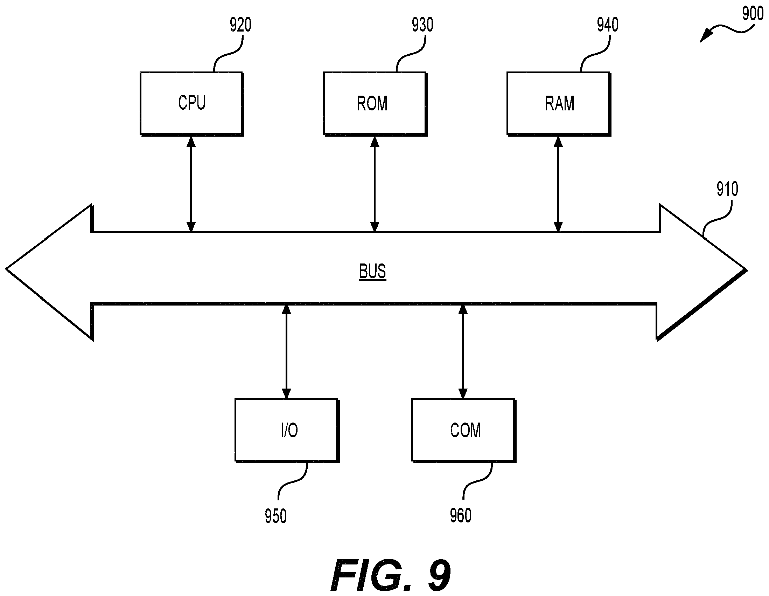

FIG. 9 illustrates an example device 900 that may execute techniques presented herein. For example, device 900 of FIG. 9 may be used to perform processes related to any systems, components, blocks, operations, and/or steps discussed herein such as, for example, those discussed in reference to FIGs. 1-8. Device 900 may include a central processing unit (CPU) 920. CPU 920 may be any type of processor device including, for example, any type of special purpose or a general-purpose microprocessor device. As will be appreciated by persons skilled in the relevant art, CPU 920 also may be a single processor in a multi-core/multiprocessor system, such system operating alone, or in a cluster of computing devices operating in a cluster or server farm. CPU 920 may be connected to a data communication infrastructure 910, for example a bus, message queue, network, or multi-core message-passing scheme.

Device 900 may also include a main memory 940, for example, random access memory (RAM), and also may include a secondary memory 930. Secondary memory 930, e.g. a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 930 may include similar means for allowing computer programs or other instructions to be loaded into device 900. Examples of such means may include a program cartridge and cartridge interface (such as that found in video game devices), a removable memory chip (such as an EPROM or PROM) and associated socket, and other removable storage units and interfaces, which allow software and data to be transferred from a removable storage unit to device 900.

Device 900 also may include a communications interface ("COM") 960. Communications interface 960 allows software and data to be transferred between device 900 and external devices. Communications interface 960 may include a modem, a network interface (such as an Ethernet card), a communications port, a PCMCIA slot and card, or the like. Software and data transferred via communications interface 960 may be in the form of signals, which may be electronic, electromagnetic, optical or other signals capable of being received by communications interface 960. These signals may be provided to communications interface 960 via a communications path of device 900, which may be implemented using, for example, wire or cable, fiber optics, a phone line, a cellular phone link, an RF link or other communications channels.

The hardware elements, operating systems, and programming languages of such equipment are conventional in nature, and it is presumed that those skilled in the art are adequately familiar therewith. Device 900 may also include input and output ports 950 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

Throughout this disclosure, references to components or modules generally refer to items that logically can be grouped together to perform a function or group of related functions. Like reference numerals are generally intended to refer to the same or similar components. Components and modules may be implemented in software, hardware or a combination of software and hardware.

The tools, modules, and functions described above may be performed by one or more processors. "Storage" type media may include any or all of the tangible memory of the computers, processors, or the like, or associated modules thereof, such as various semiconductor memories, tape drives, disk drives and the like, which may provide non-transitory storage at any time for software programming.

Software may be communicated through the Internet, a cloud service provider, or other telecommunication networks. For example, communications may enable loading software from one computer or processor into another. As used herein, unless restricted to non-transitory, tangible "storage" media, terms such as computer or machine "readable medium" refer to any medium that participates in providing instructions to a processor for execution.

While the presently disclosed methods, devices, and systems are described with exemplary reference to transmitting data, it should be appreciated that the presently disclosed embodiments may be applicable to any environment, such as a desktop or laptop computer, a mobile device, a wearable device, an application, or the like. In addition, the presently disclosed embodiments may be applicable to any type of Internet protocol.

It will be apparent to those skilled in the art that various modifications and variations can be made in the disclosed devices and methods without departing from the scope of the disclosure. Other aspects of the disclosure will be apparent to those skilled in the art from consideration of the specification and practice of the features disclosed herein. It is intended that the specification and examples be considered as exemplary only.

## Claims

1. A method for authenticating a user, the method comprising:
receiving, by an authentication module associated with a mobile network operator, MNO, core network, a first Mobile Station Integrated Services Digital Network, MSISDN, number registered with a subscriber device;
receiving, by the authentication module, a second MSISDN number from a web server responsive to a request to connect with the web server, wherein the request to connect is triggered by the subscriber device;
causing, by the authentication module, the subscriber device to be redirected to the authentication module in response to the request to connect;
determining, by the authentication module and responsive to the causing the subscriber device to be redirected, whether the first MSISDN number matches the second MSISDN number; and
providing, by the authentication module, an authentication indicator responsive to the determination of whether the first MSISDN number matches the second MSISDN number.

2. The method of claim 1, wherein receiving the first MSISDN number registered with the subscriber device comprises:
storing, by the authentication module in a database, the first MSISDN number mapped to a first private IP address associated with the first MSISDN number;
responsive to the redirected request, receiving a second private IP address associated with the subscriber device; and
receiving the first MSISDN number from the database based on matching the second private IP address associated with the subscriber device with the first private IP address associated with the first MSISDN number.

3. The method of claim 2, wherein determining whether the first MSISDN number matches the second MSISDN number is further in response to receiving the first MSISDN number from the database.

4. The method of claim 1, wherein the receiving, by the authentication module, the second MSISDN number from a web server comprises receiving the second MSISDN number via a cloud communication platform.

5. The method of claim 4, further comprising:
providing the authentication indicator including a positive authentication indicator to the web server; and
causing the request to connect to be approved based on the authentication indicator including the positive authentication indicator.

6. The method of claim 4, further comprising:
receiving, by the cloud communication platform and from the web server, a public IP address associated with the request to connect with the web server; and
determining, by the cloud communication platform, that the MNO core network is associated with the subscriber device.

7. The method of claim 6, further comprising:
generating, by the cloud communication platform based on determining that the MNO core network is associated with the subscriber device, a first redirect uniform resource locator (URL) to cause the subscriber device to be redirected to the authentication module; and
causing the generated first redirect URL to be provided to the subscriber device.

8. The method of claim 7, further comprising:
generating, by the authentication module, a second redirect URL to cause the subscriber device to be redirected to the web server; and
causing the second redirect URL to be provided to the subscriber device.

9. The method of claim 1, further comprising:
terminating, by the authentication module, a transport layer security, TLS, protocol responsive to the redirected request.

10. A method for authenticating a user, the method comprising:
receiving, by an authentication module associated with a mobile network operator, MNO, core network, a first Mobile Station Integrated Services Digital Network, MSISDN, number registered with a subscriber device;
receiving, by a cloud communication platform and from a web server, a second MSISDN number responsive to a request to connect with the web server, wherein the request to connect is triggered by the subscriber device;
causing, by the cloud communication platform, the subscriber device to be redirected to the authentication module in response to the request to connect;
determining, by the cloud communication platform and responsive to the causing the subscriber device to be redirected, whether the first MSISDN number matches the second MSISDN number; and
providing, by the cloud communication platform and to the web server, an authentication indicator responsive to the determination of whether the first MSISDN number matches the second MSISDN number.

11. The method of claim 10, wherein the second MSISDN number is associated with the subscriber device.

12. The method of claim 10, wherein receiving the first MSISDN number registered with the subscriber device comprises:
storing, by the authentication module in a database, the first MSISDN number mapped to a private IP address associated with the first MSISDN number;
responsive to the redirected request, receiving a second private IP address associated with the subscriber device; and
receiving the first MSISDN number from the database based on matching the second private IP address associated with the subscriber device with the first private IP address associated with the first MSISDN number.

13. The method of claim 10, further comprising:
receiving, by the cloud communication platform and from the authentication module, the first MSISDN number.

14. The method of claim 10, further comprising:
providing, by the cloud communication platform and to the web server, the authentication indicator including a positive authentication indicator; and
causing the request to connect to be approved based on the authentication indicator including the positive authentication indicator.

15. A system, comprising:
a data storage device storing processor-readable instructions; and
a processor operatively connected to the data storage device and configured to execute the instructions to perform operations that include:
receiving a first Mobile Station Integrated Services Digital Network, MSISDN, number registered with a subscriber device;
receiving a second MSISDN number from a web server responsive to a request to connect with the web server, wherein the request to connect is triggered by the subscriber device;
causing the subscriber device to be redirected to an authentication module in response to the request to connect;
determining, responsive to the causing the subscriber device to be redirected, whether the first MSISDN number matches the second MSISDN number; and
providing an authentication indicator responsive to the determination of whether the first MSISDN number matches the second MSISDN number.
